# EUROPEAN PATENT SPECIFICATION

(11) **EP 4 091 693 B1**
(45) Date of publication and mention of the grant of the patent: **25.11.2026**
(21) Application number: 21461541.1
(22) Date of filing: 21.05.2021
(51) Int. Cl.: B01D 29/23, B01D 35/147

(54) **FILTER VALVE ASSEMBLY**
FILTERVENTILANORDNUNG
ENSEMBLE SOUPAPE DE FILTRE

(43) Date of publication of application: 23.11.2022
(73) Proprietor: Hamilton Sundstrand Corporation, Charlotte, NC 28217 (US)
(72) Inventor: Jedlinski, Marek, 51-317 Wroclaw (PL); Slodczyk, Damian, 51-317 Wroclaw (PL)
(74) Representative: Dehns

(56) References cited:
- WO-A1-96/04062
- US-A- 3 420 375
- US-A- 4 053 410
- US-A1- 2018 290 083

## Description

### TECHNICAL FIELD

The present disclosure is concerned with a valve assembly for a filter assembly such as, but not limited to, filters for fuel or oil or lubricant in machines or vehicles, e.g. a fuel filter in a vehicle or an aircraft.

### BACKGROUND

Filters are provided in various applications to filter fluid flowing along a fluid flow path in order, for example, to remove particles or contaminants from the fluid. The present disclosure is concerned with the type of filter having a fluid inlet and a fluid outlet and a filter path between the inlet and the outlet, wherein the filter path passes through a filter medium arranged to remove the material to be filtered from the fluid before it arrives at the outlet. Such filters find use in e.g. vehicle fuel systems, where fuel is drawn from a reservoir by a pump and delivered to the engine. Filters are provided in the flow path to remove any particulate matter or debris and to ensure that the fuel reaching the engine is as clean as possible to avoid damage to the engine and permit optimal engine performance. Such filter assemblies may comprise a manifold with an inlet and outlet for connection to the fuel lines and a filter material. This may be provided in a filter cartridge removably attached to the manifold. Filters are also used to filter lubricant fluid e.g. oil and whilst the assembly of the disclosure is described in relation to fuel supply systems, this is by way of example only and the principles may apply equally to filters for lubricant or other fluids. In vehicles, and particularly in aircraft, the effectiveness and reliability of the filters is important for performance, efficiency and safety. Filters are disclosed in WO 96/04062 A and US 2018/290083 A.

Over time, the filter material may become clogged presenting an impedance to the flow of fluid through the filter. To avoid the engine being cut off from the fuel supply when the filter medium is clogged, most fuel supply systems will provide a way to bypass the filter medium in the event of it becoming clogged since it is important for the engine to receive some fuel, even if it contains debris, rather than no fuel at all. The bypass system will allow fuel to flow to the engine until such time that the filter material can be replaced e.g. by removing and replacing the filter cartridge.

Current filter bypass systems tend to be large and complex and this adds considerably to the cost, weight and size of the filter assembly.

Further, as mentioned above, when the filter medium becomes clogged or has exceeded its useful or permitted life, it needs to be removed and replaced. Conventionally, this requires the fuel system, and therefore the engine, to be switched off while the filter medium is removed, leading to undesirable downtime.

There is a need for a bypass system for a filter assembly that is simple, small and lightweight whilst maintaining reliability. There is also a need for an automatic shut-off system that allows a filter to be removed and replaced without the need to shut-off the entire fuel system and to avoid leakage during removal of the filter cartridge.

### SUMMARY

The assembly according to this disclosure is a valve assembly comprising a bypass valve and a shut-off valve that are integrated inside the housing or manifold of a filter assembly and that are automatically actuated.

According to an aspect of the disclosure, there is provided a filter assembly as defined by claim 1.

Also disclosed is a fuel filter, a method of filtering fluid and a method of detaching the filter housing from the manifold.

Preferred embodiments of the invention will now be described in more detail, by way of example only, with reference to the drawings.

### BRIEF DESCRIPTION OF THE DRAWINGS

Figure 1 is a perspective view of a filter assembly.
Figure 2 is a cut-away view of a filter assembly as shown in Fig. 1 and in accordance with the disclosure.
Figure 3 show a sectional view of an assembly according to this disclosure.
Figure 4 shows the flow through the filter assembly in normal operation.
Figure 5 shows the flow through the filter assembly in bypass operation.
Figs 6A, 6B and 6C show operation of the shut off valve function.

### DETAILED DESCRIPTION

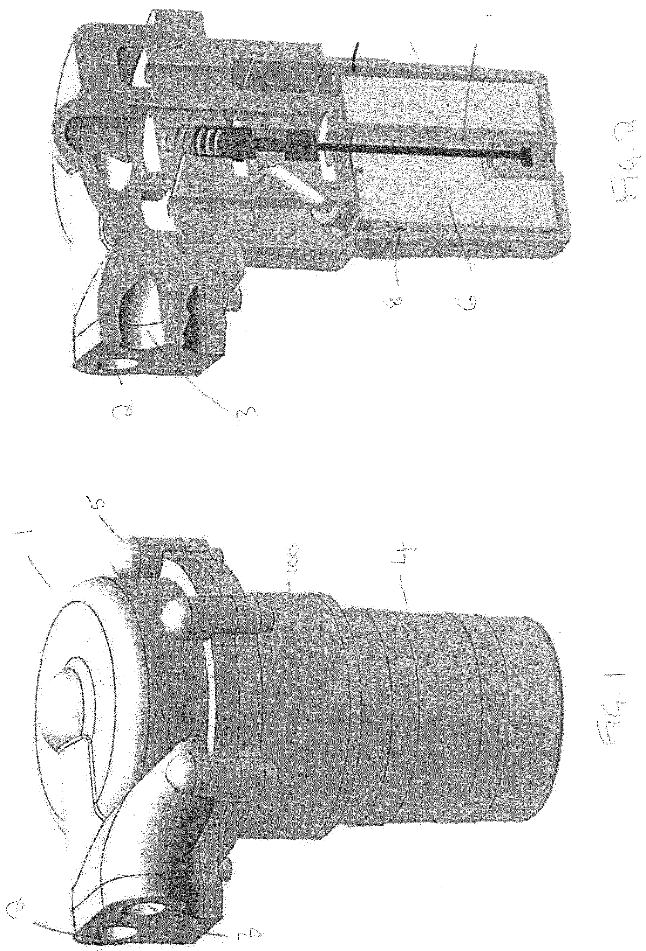

Figure 1 shows a filter assembly such as those used in fuel systems or the like. Such filters may be placed between the fuel reservoir and the fuel pump and/or between the pump and the engine, to remove debris, particulate matter etc. from the fuel before it reaches the engine. The outer shape and structure of the filter is as is known in the field and is designed to fit in a fuel supply system of the vehicle/aircraft etc. The aim of the present disclosure is to provide a by-pass and shut off system that can be integrated into such a filter assembly without changing the design or the envelope of the exterior of the assembly.

The filter assembly includes a filter manifold 1 having a fluid inlet 2 and a fluid outlet 3. The inlet 2 is configured to be connected to a fluid line from the reservoir or pump (not shown) supplying fluid/fuel to be filtered. The following description will refer to a fuel filter, but it should be understood that the fluid could be other than fuel and reference to fuel is by way of example only.

The outlet 3 is configured to be connected to a fluid line for providing the filtered fluid to the pump (if the filter is between the reservoir and the pump) or to the end user of the fluid e.g. the engine (if the filter is between the pump and the engine). The manifold 1 is attached to a filter canister or bowl 4 by a connector 100, which houses the valve assembly described further below, and fasteners 5. A threaded connector 101 is provided between the connector and the bowl 4. As will be described further below with reference to the other drawings, fluid provided to the filter inlet passes from the manifold 1 into the filter canister or bowl 4. The filter bowl 4 contains a filter medium 6 which may be e.g. in the form of a cartridge fitted into the bowl. The filter medium 6 which may be e.g. paper or other known filter material is formed to define an inner chamber 7. An outer chamber 8 is defined between the filter medium 6 and the inner wall 4' of the filter bowl 4. Fluid from the inlet, passing into the filter, is directed into the inner chamber 7. Due to the pressure of the pump and the build-up of pressure in the inner chamber the fluid is forced outwards through the filter medium 6 into the outer chamber 8 and is then forced up to and out from the outlet 3. This is known and standard for such filter assemblies.

As mentioned above, problems can arise when the filter medium 6 becomes clogged or defective such that the fluid in the inner chamber 7 is not able to pass through the filter medium into the outer chamber and to the outlet. The fluid (fuel) would then not reach the engine.

Further, when the filter medium needs replacing, with known assemblies, the fluid supply needs to be cut off to prevent fluid flowing into the inlet so that the bowl 4 can be disconnected from the manifold without fluid leakage, and replaced with new filter medium and reattached before the fluid flow can be re-started.

According to this disclosure, a valve assembly is provided to regulate fluid flow when it cannot pass through the filter medium. The valve assembly is integrated into and inside the manifold of the filter assembly.

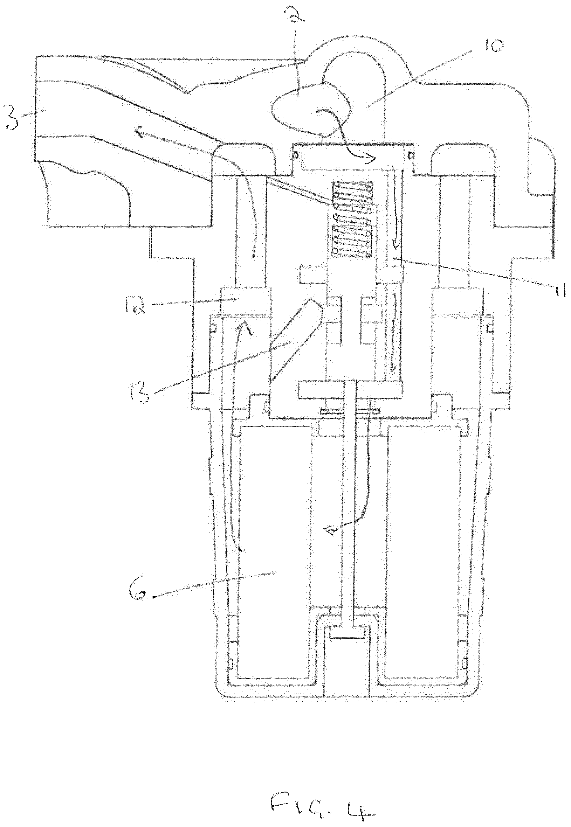

In normal operation, the fluid e.g. fuel flows into the inlet 2 in the manifold 1, as best seen by the arrows in Fig. 4. The fuel flows into a supply chamber 10 and along a supply channel 11, from where it flows into the inner chamber 7 of the filter. The fuel flows, under pressure of the pump, through the filter medium 6, where debris or contaminants are filtered from the fluid and retained in the filter medium 6. The filtered fluid then flows from the outer chamber 8 to an outlet chamber 12 and out of the filter via the outlet 3 of the manifold 1.

As mentioned above, the filter can become clogged and will, after a while, need to be removed and replaced. The valve assembly of this disclosure, as described in more detail below, acts to direct the fuel via a bypass channel 13 in the event that the filter becomes clogged, as indicated by an excessive pressure differential between valve control areas (as described further below and due to the pressure in the inner chamber increasing because the flow through the filter medium is hindered), thus bypassing the filter medium. This ensures that in such an event, fuel will continue to be provided to e.g. the engine even in the event that the filter is not usable. Of course, the output fuel will not be filtered, but some (unfiltered) fuel is preferable to no fuel at all.

The valve assembly also operates to shut off fuel flow through the filter in the event that the filter bowl 4 is removed e.g. for maintenance, so as to prevent fuel leakage. The shut off function shuts off the supply channel and, optionally, may also shut off the outlet chamber.

The valve assembly is located entirely within the envelope of the filter defined by the manifold, the connector and the filter bowl, and comprises a valve spool 20, a valve spring 21 and a sleeve 22 housing the spool 20 and the spring 21.

An adjust screw 23 is attached by a screw thread to, and extends from the bottom of the filter bowl 4 through the inner chamber 7 to the end of the spool 20 and abuts against the spool 20.

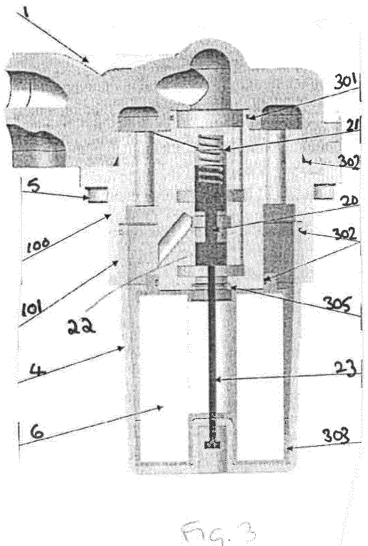

The length of the adjust screw 23 is set, at assembly, such that it abuts against the spool 20, at one end of the screw, and against the bowl at the other end of the screw when the spool is in the normal operating position. The spring 21 acts against the other end of the spool 20. The spring force is selected to bias the spool to the normal operating position as shown in Figs 3, 4 and 6A. Seals, e.g. O-rings 301, 302, 303 and 304 are provided at appropriate positions to prevent leakage. A snap ring 305 is provided around the screw 23 where the filter bowl 4 meets the connector/valve housing 100.

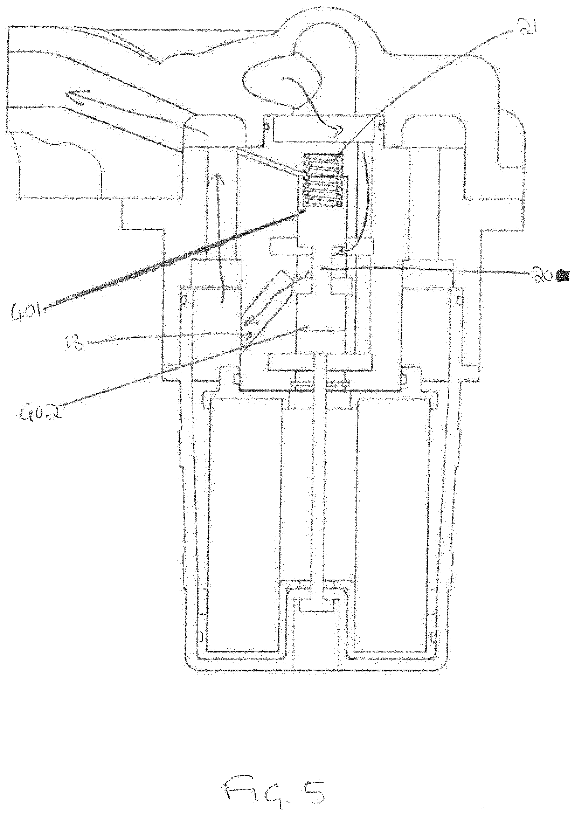

The bypass operation will now be described in more detail with reference to Fig. 5. The valve spool 20 is positioned in relation to the bypass channel 13 and moved relative thereto by means of the spring 21 and the pressure differential across the spool control areas 401, 402 corresponding to inlet and outlet pressure. In normal operating conditions, as shown in Fig. 4, the pressure differential across the spool does not exceed the force of the spring 21 biasing the valve spool to its closed position. In this position, the spool body blocks the bypass channel 13. Fluid cannot, therefore, flow from the supply channel through the bypass channel and so is directed through the supply channel and through the filter medium as described above.

If, however, the pressure in the inner chamber 7 becomes excessive and so the pressure differential across the control areas 401, 402 exceeds the spring force, the valve spool 20 is pushed against the spring force, as seen in Fig. 5, which opens the inlet channel which was previously covered by the spool. The inlet channel is then connected to the bypass channel 13 allowing for flow directly from the inlet to the outlet, bypassing the filter medium. Fuel entering the inlet is thus directed, as shown by the arrows in Fig. 5, from the supply chamber through the bypass channel 13, from where it flows to the outlet chamber and to the outlet 3 without passing through the filter medium 6.

Thus, bypass valve spring 21 controls the movement of the spool 20 based on the filter pressure difference, to open the bypass channel 13 if the pressure difference exceeds the predetermined threshold. The spring itself, however, is not located in the fluid flow path, but, rather, in a 'blind' cavity covered by the piston body. If the spring were in the fluid flow path, the fluid flow could excite the spring and cause resonance in the fluid. A spring in the fluid flow path would also disturb the flow. Further, if the spring were to be damaged, spring material could create debris in the system fluid flow, which could further damage the system.

When the pressure difference decreases again, the spool will move, under the force of the spring, back to the default position where the bypass channel is closed by the spool body and the fluid is then forced again from the inlet chamber into the inner chamber, through the filter medium to the outer chamber and the outlet chamber and out through the outlet.

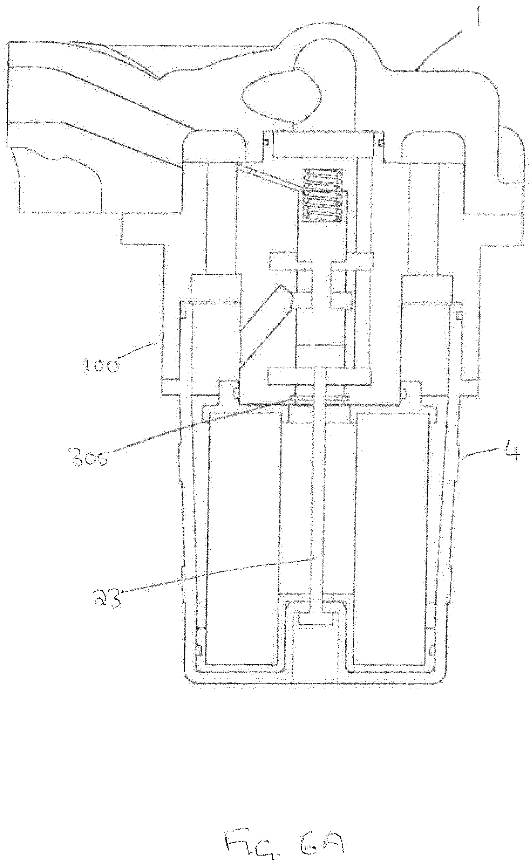

The same valve assembly components are also configured to perform a shut off function that shuts off fuel flow when the filter bowl 4 is removed from the manifold 1 e.g. for maintenance. The shut off function is described with reference to Figs. 6A to 6C.

Fig. 6A shows the manifold 1, connector/valve housing 100 and filter bowl 4 assembled as described above.

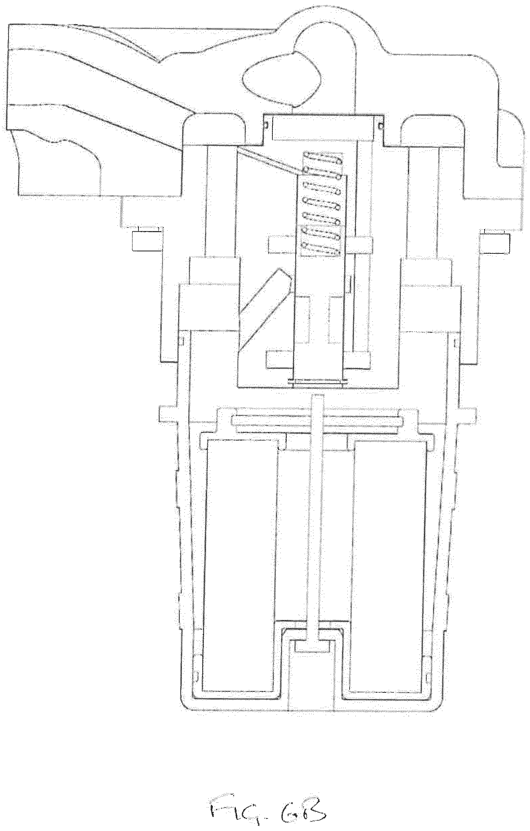

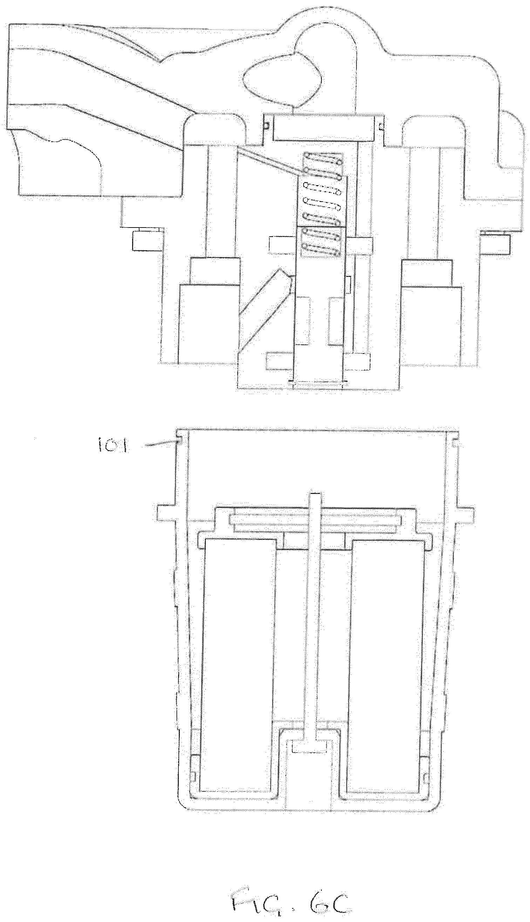

To remove the filter bowl 4, it is unscrewed from the connector 100 using the thread 101. Fig. 6B shows the assembly as the bowl is being unscrewed. Fig. 6C shows the filter bowl removed from the manifold 1.

While the bowl 4 is properly attached to the manifold (Fig. 6A), the adjust screw 23 engages with the valve spool 20 in its normal operating position. As the bowl is being unscrewed, the adjust screw 23 moves, with the bowl 4 away from the spool 20 or, put otherwise, the pressure the screw 23 exerts against the spool 20, against the spring 21, is reduced. Accordingly, the spring is able to expand thus pushing the spool in an axial direction to a shut off position as shown in Fig. 6B. The length of the adjust screw 23 and the force of the spring have been set such that during unscrewing, and before the bowl has been completely removed, the spool has been pushed by the spring to the shut off position where the flow path from the supply chamber to the inner chamber 7 is cut off by the spool body. When the bowl 4 is detached (Fig. 6C), the inlet flow is therefore closed off and there can be no fuel leakage from the manifold/connector. The snap ring 305 prevents the spool 20 from falling out of the valve housing 100.

When the filter bowl is reattached, the screw pushes against the spool and against the spring force to return the spool to the normal position to open the flow path again through the filter medium.

Thus, a single valve assembly of a spool, spring and adjust screw, mounted inside the filter assembly, performs both a bypass function and a shut off function when required.

The valve assembly of this disclosure can be located inside existing manifold designs and thus does not increase the envelope of the filter assembly. The valve assembly is relatively simple, small and lightweight and enables simple, quick and less frequent maintenance without fuel loss. Only a single spring is required for the valve assembly, which is advantageous because springs are expensive components. Further, the failure of any one valve component will not cause the loss of filter function. The valve assembly is reliable and durable thus reducing the costs and time of maintenance.

## Claims

1. A filter assembly comprising:
a manifold (1) having a fluid inlet (2) and a fluid outlet (3),
a filter housing (4) having a filter medium (6) provided therein, the filter medium defining an inner filter chamber (7) and defining an outer filter chamber (8) between the filter medium and the filter housing, the filter housing being removably attached to the manifold so as to provide a fluid flow path from the inlet into the inner filter chamber, through the filter medium into the outer chamber and out of the outlet; **characterised by** the filter assembly further comprising a valve assembly mounted inside the manifold, and a by-pass channel (13) defined inside the manifold between the fluid inlet and the fluid outlet, the valve assembly comprising a valve spool (20) and a valve spring (21) arranged in engagement with the spool to bias the spool into a first position and to compress, in response to a pressure differential across the valve spool exceeding the spring force, to move the spool to a second position being a bypass position in which a bypass channel is opened to direct flow from the fluid inlet to the fluid outlet without passing through the filter medium, the valve assembly further comprising an adjust screw (23) attached by a screw thread to, and extending from a bottom of the filter housing, through the inner chamber (7), to an end of the valve spool (20), the adjust screw having a predetermined length such that when the spool is in the first position, the adjust screw abuts against the spool, and wherein as the filter housing is being detached from the manifold, the adjust screw moves with the filter housing away from engagement with the spool allowing the valve spring to expand to move the spool to a third, shut off position whereby flow from the inlet is cut off from entering the filter housing and whereby the bypass channel is also closed.

2. The filter assembly of claim 1, further comprising a supply chamber (10) between the fluid inlet (2) and the inner filter chamber (7).

3. The filter assembly of claim 2, further comprising a supply channel (11) fluidly connecting the supply chamber (10) and the inner filter chamber (7).

4. The filter assembly of any preceding claim, further comprising an outlet chamber (12) between the outer filter chamber (8) and the fluid outlet (3).

5. The filter assembly of any preceding claim, further comprising a sleeve (22) housing the spool and the valve spring.

6. The filter assembly of any preceding claim, further comprising sealing means between the manifold and the filter housing.

7. The filter assembly of any preceding claim, further comprising a snap ring (305) around the adjust screw at an interface between the filter housing and the manifold.

8. A fuel filter arranged between a fuel supply and a fuel application and comprising the filter assembly of any preceding claim, the inlet arranged to be connected to the fuel supply and the outlet arranged to be connected to the fuel application.

9. A method of providing fluid from a fluid source to a fluid application via a filter assembly as claimed in any of claims 1 to 7, comprising providing fluid from the fluid source to the fluid inlet (2), the fluid passing through the filter medium to provide filtered fluid to the fluid application via the fluid outlet (3), and wherein fluid is caused to flow from the inlet to the outlet without passing through the filter medium in response to the pressure differential across the valve spool exceeding the spring force.

10. A method of removing the filter housing (4) from the manifold (1) of the filter assembly as claimed in any of claims 1 to 7, comprising rotating the filter housing relative to the manifold until the adjust screw is at a position where the spool is in the shut off position and then detaching the filter housing from the manifold by further rotation of the filter housing relative to the manifold.

## Patentansprüche

1. Filterbaugruppe, umfassend:
einen Verteiler (1), der einen Fluideinlass (2) und einen Fluidauslass (3) aufweist,
ein Filtergehäuse (4), in dem ein Filtermedium (6) vorgesehen ist, wobei das Filtermedium eine innere Filterkammer (7) definiert und eine äußere Filterkammer (8) zwischen dem Filtermedium und dem Filtergehäuse definiert, wobei das Filtergehäuse abnehmbar an dem Verteiler angebracht ist, um einen Fluidströmungsweg von dem Einlass in die innere Filterkammer, durch das Filtermedium in die äußere Kammer und aus dem Auslass bereitzustellen; **dadurch gekennzeichnet, dass** die Filterbaugruppe ferner eine innerhalb des Verteilers montierte Ventilbaugruppe und einen Bypasskanal (13) umfasst, der innerhalb des Verteilers zwischen dem Fluideinlass und dem Fluidauslass definiert ist, wobei die Ventilbaugruppe einen Ventilkolben (20) und eine Ventilfeder (21) umfasst, die in Eingriff mit dem Kolben angeordnet ist, um den Kolben in eine erste Stellung vorzuspannen und sich in Reaktion auf eine Druckdifferenz über den Ventilkolben, die die Federkraft übersteigt, zusammenzudrücken, um den Kolben in eine zweite Stellung zu bewegen, die eine Bypassstellung ist, in der ein Bypasskanal geöffnet wird, um die Strömung von dem Fluideinlass zu dem Fluidauslass zu leiten, ohne durch das Filtermedium zu strömen, wobei die Ventilbaugruppe ferner eine Einstellschraube (23) umfasst, die durch ein Schraubgewinde an einem Boden des Filtergehäuses befestigt ist und sich von einem Boden des Filtergehäuses durch die innere Kammer (7) zu einem Ende des Ventilkolbens (20) erstreckt, wobei die Einstellschraube eine vorbestimmte Länge aufweist, sodass, wenn sich der Kolben in der ersten Stellung befindet, die Einstellschraube an dem Kolben anliegt, und wobei, während das Filtergehäuse von dem Verteiler abgenommen wird, sich die Einstellschraube mit dem Filtergehäuse aus dem Eingriff mit dem Kolben bewegt, wodurch sich die Ventilfeder ausdehnen kann, um den Kolben in eine dritte, Sperrstellung zu bewegen, wodurch die Strömung von dem Einlass am Eintritt in das Filtergehäuse gehindert wird und wodurch der Bypasskanal ebenfalls geschlossen wird.

2. Filterbaugruppe nach Anspruch 1, ferner umfassend eine Versorgungskammer (10) zwischen dem Fluideinlass (2) und der inneren Filterkammer (7).

3. Filterbaugruppe nach Anspruch 2, ferner umfassend einen Versorgungskanal (11), der die Versorgungskammer (10) und die innere Filterkammer (7) fluidisch verbindet.

4. Filterbaugruppe nach einem der vorhergehenden Ansprüche, ferner umfassend eine Auslasskammer (12) zwischen der äußeren Filterkammer (8) und dem Fluidauslass (3).

5. Filterbaugruppe nach einem der vorhergehenden Ansprüche, ferner umfassend eine Hülse (22), die den Kolben und die Ventilfeder aufnimmt.

6. Filterbaugruppe nach einem der vorhergehenden Ansprüche, ferner umfassend Dichtungsmittel zwischen dem Verteiler und dem Filtergehäuse.

7. Filterbaugruppe nach einem der vorhergehenden Ansprüche, ferner umfassend einen Sprengring (305) um die Einstellschraube an einer Grenzfläche zwischen dem Filtergehäuse und dem Verteiler.

8. Kraftstofffilter, angeordnet zwischen einer Kraftstoffzufuhr und einer Kraftstoffanwendung und umfassend die Filterbaugruppe nach einem der vorhergehenden Ansprüche, wobei der Einlass dazu angeordnet ist, mit der Kraftstoffzufuhr verbunden zu werden, und der Auslass dazu angeordnet ist, mit der Kraftstoffanwendung verbunden zu werden.

9. Verfahren zum Bereitstellen von Fluid aus einer Fluidquelle an eine Fluidanwendung über eine Filterbaugruppe nach einem der Ansprüche 1 bis 7, umfassend das Bereitstellen von Fluid aus der Fluidquelle an den Fluideinlass (2), wobei das Fluid durch das Filtermedium strömt, um über den Fluidauslass (3) gefiltertes Fluid an die Fluidanwendung bereitzustellen, und wobei Fluid veranlasst wird, von dem Einlass zu dem Auslass zu strömen, ohne durch das Filtermedium zu strömen, in Reaktion darauf, dass die Druckdifferenz über den Ventilkolben die Federkraft übersteigt.

10. Verfahren zum Entfernen des Filtergehäuses (4) aus dem Verteiler (1) der Filterbaugruppe nach einem der Ansprüche 1 bis 7, umfassend das Drehen des Filtergehäuses relativ zu dem Verteiler, bis sich die Einstellschraube an einer Position befindet, in der sich der Kolben in der Sperrstellung befindet, und dann das Lösen des Filtergehäuses von dem Verteiler durch weiteres Drehen des Filtergehäuses relativ zu dem Verteiler.

## Revendications

1. Ensemble filtre comprenant :
un collecteur (1) présentant une entrée de fluide (2) et une sortie de fluide (3),
un boîtier de filtre (4) présentant un milieu filtrant (6) prévu à l'intérieur de celui-ci, le milieu filtrant définissant une chambre de filtre intérieure (7) et définissant une chambre de filtre extérieure (8) entre le milieu filtrant et le boîtier de filtre, le boîtier de filtre étant fixé de manière amovible au collecteur de manière à fournir un trajet d'écoulement de fluide depuis l'entrée dans la chambre de filtre intérieure, à travers le milieu filtrant jusqu'à la chambre extérieure et hors de la sortie ; **caractérisé en ce que** l'ensemble filtre comprend également un ensemble soupape monté à l'intérieur du collecteur, et un canal de dérivation (13) défini à l'intérieur du collecteur entre l'entrée de fluide et la sortie de fluide, l'ensemble soupape comprenant un tiroir de soupape (20) et un ressort de soupape (21) agencé en prise avec le tiroir de soupape pour solliciter le tiroir de soupape dans une première position et pour se comprimer, en réponse à une différence de pression à travers le tiroir de soupape dépassant la force de ressort, pour déplacer le tiroir de soupape vers une deuxième position qui est une position de dérivation dans laquelle un canal de dérivation est ouvert pour diriger l'écoulement de l'entrée de fluide vers la sortie de fluide sans passer à travers le milieu filtrant, l'ensemble soupape comprenant en outre une vis de réglage (23) fixée par un filetage de vis à une partie inférieure du boîtier de filtre et s'étendant depuis celle-ci, à travers la chambre intérieure (7), jusqu'à une extrémité du tiroir de soupape (20), la vis de réglage présentant une longueur prédéterminée telle que, lorsque le tiroir est dans la première position, la vis de réglage vient en butée contre le tiroir, et dans lequel, lorsque le boîtier de filtre est détaché du collecteur, la vis de réglage s'éloigne, avec le boîtier de filtre, de son engagement avec le tiroir, permettant ainsi au ressort de soupape de se déployer pour déplacer le tiroir vers une troisième position de fermeture, ce qui empêche le flux provenant de l'entrée de pénétrer dans le boîtier de filtre et ferme également le canal de dérivation.

2. Ensemble filtre selon la revendication 1, comprenant en outre une chambre d'alimentation (10) entre l'entrée de fluide (2) et la chambre de filtre intérieure (7).

3. Ensemble filtre selon la revendication 2, comprenant en outre un canal d'alimentation (11) reliant fluidiquement la chambre d'alimentation (10) et la chambre de filtre intérieure (7).

4. Ensemble filtre selon l'une quelconque des revendications précédentes, comprenant en outre une chambre de sortie (12) entre la chambre de filtre extérieure (8) et la sortie de fluide (3).

5. Ensemble filtre selon l'une quelconque des revendications précédentes, comprenant en outre un manchon (22) abritant le tiroir et le ressort de soupape.

6. Ensemble filtre selon l'une quelconque des revendications précédentes, comprenant en outre des moyens d'étanchéité entre le collecteur et le boîtier de filtre.

7. Ensemble filtre selon l'une quelconque des revendications précédentes, comprenant en outre un anneau élastique (305) autour de la vis de réglage, au niveau d'une interface entre le boîtier de filtre et le collecteur.

8. Filtre à carburant agencé entre une alimentation en carburant et une application de carburant et comprenant l'ensemble filtre selon l'une quelconque des revendications précédentes, l'entrée étant agencée pour être connectée à l'alimentation en carburant et la sortie étant agencée pour être connectée à l'application de carburant.

9. Procédé permettant de fournir du fluide depuis une source de fluide vers une application de fluide par l'intermédiaire d'un ensemble filtre selon l'une quelconque des revendications 1 à 7, comprenant la fourniture de fluide depuis la source de fluide jusqu'à l'entrée de fluide (2), le fluide passant à travers le milieu de filtre pour fournir du fluide filtré à l'application de fluide par l'intermédiaire de la sortie de fluide (3), et dans lequel le fluide est amené à s'écouler de l'entrée à la sortie sans passer à travers le milieu filtrant en réponse à la différence de pression à travers le tiroir de soupape dépassant la force de ressort.

10. Procédé permettant de retirer le boîtier de filtre (4) du collecteur (1) de l'ensemble filtre selon l'une quelconque des revendications 1 à 7, comprenant la rotation du boîtier de filtre par rapport au collecteur jusqu'à ce que la vis de réglage soit dans une position dans laquelle le tiroir est dans la position de fermeture, puis le détachement du boîtier de filtre du collecteur par une rotation supplémentaire du boîtier de filtre par rapport au collecteur.
